# EUROPÄISCHE PATENTANMELDUNG

(11) **EP 1 431 008 A2**
(43) Veröffentlichungstag der Anmeldung: **23.06.2004**
(21) Anmeldenummer: 03014682.3
(22) Anmeldetag: 27.06.2003
(51) Int. Cl.: B25J 15/00, B25J 19/02

(54) **Werkzeugsystem zur Verwendung mit einem Roboter**

(30) Priorität: 18.12.2002 DE 10259632
(71) Anmelder: IMI NORGREN Automotive GmbH, 65462 Ginsheim-Gustavsburg (DE)
(72) Erfinder: Oerder, Markus, 61479 Glashütten (DE)
(74) Vertreter: Quermann, Helmut, Dipl.-Ing.

(57) **Zusammenfassung**

Die Erfindung betrifft ein Werkzeugsystem (1), insbesondere ein Greifersystem, zur Verwendung mit einem Roboter, wobei das Werkzeugsystem ein mittels des Roboters bewegbares Tragsystem (8) und am Tragsystem positionierte Werkzeuge (7), insbesondere Greifer, aufweist.

Erfindungsgemäß wird vorgeschlagen, dass eine Einrichtung (14) zur Fehlererkennung vorgesehen ist, die berührungslos die Position der Werkzeuge relativ zum Tragsystem erfasst.

Hierdurch können Qualitätsmängel im System unmittelbar erkannt werden.

## Beschreibung

Die Erfindung betrifft ein Werkzeugsystem zur Verwendung mit einem Roboter, wobei das Werkzeugsystem ein mittels des Roboters bewegbares Tragsystem und mindestens ein am Tragsystem positioniertes Werkzeug aufweist.

Unter Werkzeugen werden dabei insbesondere solche verstanden, die dem Spannen, Halten und/oder Positionieren von Gegenständen dienen. Dies kann beispielsweise durch Greifer, Spannelemente oder Stifte, die Löcher in Bauteilen durchsetzen, erfolgen.

Bei Robotern, insbesondere solchen, die in der Kraftfahrzeugindustrie Verwendung finden, werden beispielsweise Werkzeugsysteme in Art von Greifersystemen benötigt, um im Rohbau die Bauteile zu handhaben. Die Greifersysteme werden dazu als eine Art Hand am Roboter befestigt und führen unterschiedliche Funktionen aus. Es kann sich hierbei beispielsweise um ein Bauteilhandling von einem Ort A zu einem Ort B, Bauteilhandling einschließlich leichter Funktionen, wie Klebeauftrag, Bauteilhandling einschließlich Ausschweißen, oder die Funktion von Geometriegreifern, in denen die Geometrie der Bauteile zueinander im Greifer hergestellt wird, handeln.

In der Praxis haben sich modulare Greifer durchgesetzt, die flexible in der Anlage den Gegebenheiten angepasst werden können. Bei der Montage werden die Greifer entsprechend den Anforderungen exakt am Tragsystem positioniert, insbesondere mittels einer Klemmverbindung. Als Nachteil dieser flexiblen, somit nicht starren Ausführung, ergibt sich die Situation, dass, beispielsweise beim Lockern der Klemmverbindung, der jeweilige Greifer sich relativ zum Tragsystem verlagert. Andererseits kann jeder am Roboter Arbeitende die Position der Greifer einfach verändern.

Eine Vorrichtung zum Positionieren einer Klemmeinrichtung an einer Tragstange eines Tragsystems bei einem Roboter ist aus der EP 1 041 295 A1 bekannt. Dort weist die Tragstange eine mit dieser verbindbare Justierleiste auf, die der Positionierung eines Klemmstückes dient. Sowohl die Justierleiste als auch das Klemmstück weisen Justierbohrungen auf, zur Aufnahme eines Justierstiftes in der miteinander fluchtenden Position der Justierbohrungen. - Bei dieser Einrichtung lässt sich somit eine einzige definierte Position zwischen Klemmeinrichtung und Justierleiste erzielen. Da die Justierleiste keine Verbindung mit dem Klemmelement hat und nicht verschoben wird, ist zwar immer eine genaue Positionierung möglich. Eine abweichende Position kann jedoch weder erfasst noch dargestellt und auch nicht in der Anlage dokumentiert werden.

Die Produktion der Fahrzeuge wird immer hochwertiger und genauer. Da die Betreiber mit immer genaueren Toleranzen, zum Beispiel das berühmte Spaltmaß, konfrontiert werden, müssen die Fertigungssysteme diesen Anforderungen gerecht werden. Flexible Systeme, die keine definierten Toleranzvorgaben enthalten, widersprechen der Entwicklung, egal ob das letztendliche Ergebnis gut oder schlecht ist. Dies bedeutet, dass in aktuellen Projekten verstärkt Systeme eingesetzt werden, die eine eindeutige Position sicherstellen können. Bei einer Problemanalyse ist es notwendig zu wissen, welche Ausgangssituation bestanden hat. Dies ist bei undefinierten, also flexiblen Lösungen, nicht der Fall.

Aktuell kann nicht kontrolliert werden, ob es kleine Änderungen an den Werkzeugen des Werkzeugsystems, insbesondere Greifern gegeben hat, die unbemerkt zu Qualitätsmängeln oder langfristig zu einem Crash in der Anlage führen. Probleme werden erst erkannt, wenn es zu spät ist.

Aufgabe der Erfindung ist es, ein Werkzeugsystem der eingangs genannten Art zu schaffen, bei dem sichergestellt ist, dass Qualitätsmängel im System unmittelbar erkannt werden.

Gelöst wird die Aufgabe bei dem Werkzeugsystem der eingangs genannten Art dadurch, dass eine Einrichtung zur Fehlererkennung vorgesehen ist, die berührungslos die Position des jeweiligen Werkzeuges relativ zum Tragsystem erfasst.

Die Erfindung schlägt somit vor, sich nicht darauf zu beschränken, bei der Einrichtung des Werkzeugsystems das jeweilige Werkzeug präzise zum Tragsystem zu positionieren, sondern die Position des Werkzeuges zum Tragsystem während des Betriebes des Werkzeugsystems fortwährend zu kontrollieren. Dies erfolgt mittels der Einrichtung zur Fehlererkennung. Erfasst wird mittels dieser einerseits die Position des Tragsystems, andererseits die Position des jeweiligen am Tragsystem positionierten, beispielsweise durch Spannen positionierten Werkzeuges.

Es wird als besonders vorteilhaft angesehen, wenn die Einrichtung zur Fehlererkennung in das Werkzeugsystem integriert ist. Grundsätzlich ist dies nicht notwendig. So ist durchaus denkbar, von extern die Positionen von Tragsystem und jeweiligem Werkzeug zu erfassen und in Relation zu vorgegebenen, somit Soll-Koordinaten zu setzen. Diese Koordinaten sind insbesondere bezogen auf eine Ruhestellung des Werkzeugsystems, somit eine Ruhestellung von Tragsystem und diesem zugeordneten Werkzeug. - Beispielsweise könnte die Einrichtung zur Fehlererkennung aus mehreren Bauteilen bestehen, wobei ein Bauteil an einem externen Ort angebracht ist und die Position des jeweiligen Werkzeuges erfasst, während das andere Bauteil an einem anderen Ort angebracht ist und die Position des Tragsystems erfasst.

Allerdings hat die Integration der Einrichtung zur Fehlererkennung in das Werkzeugsystem den großen Vorteil, dass der Steuerungsaufwand innerhalb des Systems erheblich reduziert werden kann. In diesem Fall sind nur Relativpositionen von Tragsystem und jeweiligem Werkzeug mittels im Bereich des Tragsystems und des Werkzeuges befestigter Bauteile der Einrichtung zur Fehlererkennung zu ermitteln und zu verarbeiten.

Wesentlich ist bei der Einrichtung zur Fehlererkennung, dass sie berührungslos die Position des jeweiligen Werkzeuges relativ zum Tragsystem erfasst. Auch dies trägt wesentlich dazu bei, dass der Steuerungsaufwand in dem System reduziert ist. Die berührungslose Erfassung kann auf unterschiedliche Art und Weise erfolgen, beispielsweise auf Basis von Laser, Optik, Funk oder Infrarot. Als besonders bevorzugt wird es angesehen, wenn die Einrichtung zur Fehlererkennung auf Basis von Laser arbeitet.

So ist insbesondere daran gedacht, jedem Werkzeug, insbesondere jedem Greifer, einen Laser zuzuordnen, ferner ein oder mehrere Laser-Empfangseinheiten dem Tragsystem zuzuordnen. Der jeweilige Laser stellt den Sender dar. Sofern es unter dem Aspekt der Positionierung der einzelnen Bestandteile des Werkzeugsystems möglich ist, wird es als besonders vorteilhaft angesehen, wenn nur eine Laser-Empfangseinheit vorgesehen ist, die der Tragstange zugeordnet ist. Alle Informationen des Lasers werden demnach von dieser Empfangseinheit empfangen. Es ist insbesondere daran gedacht, mindestens eine Empfangseinheit einer Haupttragstange zuzuordnen, die mit dem Roboter verbunden ist. Die mindestens eine Laser-Empfangseinheit ist somit demjenigen Bauteil, nämlich der Haupttragstange, zugeordnet, das als zentrales Bauteil die Verbindung zum Roboter herstellt.

Zweckmäßig ist der jeweiligen Laser-Empfangseinheit eine Auswerteeinheit für die Signale zugeordnet. Diese Auswerteeinheit sollte nicht nur geeignet sein, die Signale der diversen Laser auszuwerten, sondern auch andere für den Prozess des Bauteilhandlings mittels des Werkzeugsystems wichtige Kenngrößen. Unter diesem Aspekt sollte jedem Greifer ein Sensor, insbesondere ein analoger induktiver Sensor (AIS), zugeordnet sein, wobei der jeweilige Sensor der Erfassung des Greiferöffnungswinkels und/oder der Erfassung eines vom Greifer gehaltenen Bauteils dient. In diesen Sensor ist der Laser vorzugsweise integriert, der vorzugsweise einstellbar ist.

Auf dem Tragsystem ist die vorbeschriebene Schaltzentrale in Art von Logikmodulen montiert, über die alle Signale ausgetauscht werden. Auf dieser Schaltzentrale ist die Laser-Empfangseiheit, bei dem es sich insbesondere um eine Optik handelt, montiert.

Nachdem die Werkzeuge eingestellt wurden und prozesssicher laufen, werden die Laser manuell auf die Empfangseinheit eingestellt. Alle Meldungen werden über das Logikmodul verarbeitet, so auch die Lasereingänge.

Solange alle Meldungen eingehen, meldet die Einheit "in Ordnung" an die Steuerung. Sollte sich eine Spann-, Halte- oder Positionierungsstelle durch äußere Einflüsse verstellen, trifft der Laser nicht mehr die Optik und das Signal zeigt ein Verstellen des Werkzeuges an. Die Logik meldet umgehend "nicht in Ordnung" an die Steuerung. Die Anlage bleibt stehen oder wechselt automatisch den Greifer.

Die Erfindung ermöglicht somit eine automatische Fehlererkennung im Werkzeug. Die Verstellung der einzelnen Werkzeuge, beispielsweise Klemmelemente des Greifers, wird automatisch erkannt. Es ist eine sofortige Reaktion des Prozesses, zum Beispiel durch automatischen Greiferwechsel, möglich. Die einfache Fehleranalyse kann insbesondere auf dem Werkzeug selbst, beispielsweise dem Greifer erfolgen, insbesondere durch Leuchtdioden, die die Fehlerquelle anzeigen.

Es können die Zustände "Greiferöffnungswinkel (d.h. Greifer geöffnet oder geschlossen) - Bauteil vorhanden - Greiferposition" überprüft werden und die Informationen zu einem Signal gebündelt werden. Auch dies bedingt eine erhebliche Reduzierung des Steuerungsaufwandes in der Anlage. Es ist ein intelligentes Werkzeugsystem geschaffen, das überdies den Aufwand in der Anlage reduziert und das Werkzeug, insbesondere den Greifer, als Logikeinheit oder unabhängige Einheit optimiert.

Zwischen Empfangseinheit und Roboter muss nur ein minimaler Datenaustausch stattfinden, da insbesondere die analogen induktiven Sensoren, die jedem Werkzeug zugeordnet sind, eine dezentrale Intelligenzeinheit darstellen. Grundsätzlich kann die Kopplung zwischen dem Werkzeugssystem und dem Roboter kabellos mittels Transformatorkopplung ausgeführt werden, so dass der Roboter sein Werkzeugsystem, insbesondere Greifersystem, leicht tauschen kann.

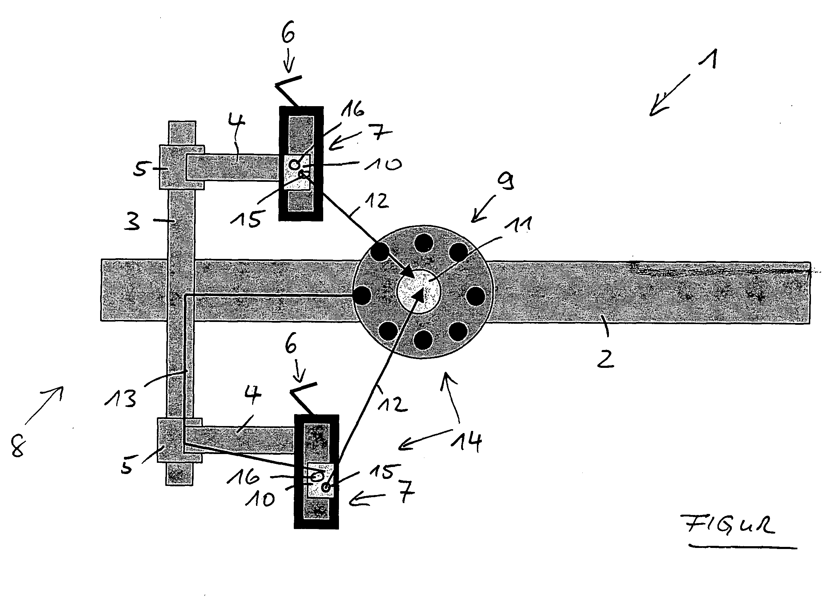

In der einzigen Figur ist die Erfindung anhand eines bevorzugten Ausführungsbeispiels stark vereinfacht dargestellt, ohne auf diese Ausführungsform beschränkt zu sein.

Gezeigt ist ein Werkzeugsystem, das als Greifersystem 1 ausgebildet ist. Dies weist zunächst eine Haupttragstange 2 auf, die unmittelbar mit einem nicht gezeigten Roboter verbindbar ist. Senkrecht zur Haupttragstange 2 ist eine Tragstange 3 angeordnet, die über nicht näher veranschaulichte Mittel mit der Haupttragstange 2 verbunden ist. Im Bereich des jeweiligen Endes der Tragstange 3 ist eine weitere, senkrecht zur Tragstange 3 angeordnete Tragstange 4 mittels einer Klemmeinrichtung 5 mit der Tragstange 3 verbunden. Bei gelöster jeweiliger Klemmeinrichtung 5 kann diese mit der zugeordneten Tragstange 4 in Längsrichtung der Tragstange 3 verschoben werden. Die Klemmeinrichtung 5 ist in einer bestimmten Stellung mit der Tragstange 3 verspannbar, wobei gegebenenfalls ein nicht gezeigtes Meßsystem zum Erfassen diverser relativer Stellungen von Klemmeinrichtung 5 und Tragstange 3 vorgesehen ist. Hierdurch lässt sich die Klemmeinrichtung 5 definiert zur Tragstange 3 positionieren. - Ein Greifersystem mit einer solchen Klemmeinrichtung ist beispielsweise in der EP 1 041 295 A1 beschrieben.

Die jeweilige Tragstange 4 nimmt im Bereich ihres der Klemmeinrichtung 5 abgewandten Endes den eigentlichen stilisiert dargestellten Greifer 7 mit Spannklauen 6 auf, dem eine Abfragekassette 10 zugeordnet ist.

Das Greifersystem 1 kann selbstverständlich mit mehreren mit der Haupttragstange 2 verbundenen Tragstangen 3 und insofern mit weiteren mit dieser Tragstange 3 verbundenen Tragstangen 4 mit Greifern 7 und Abfragekassetten 10 versehen sein, je nach den Gegebenheiten, die der Anwendung des Greifersystems im Zusammenwirken mit dem Roboter zugrunde liegen. Unter diesem Aspekt ist das freigebliebene andere Ende der Haupttragstange 2 zu sehen. Dort könnte die weitere Tragstange 3 und die mit dieser verbundenen Tragstangen 4 positioniert sein.

Die Haupttragstange 2, die Tragstange 3 sowie die Tragstangen 4 bilden das Tragsystem 8.

In den jeweiligen Greifer 7 ist die Abfragekassette 10 und ein Laser 15 integriert. Bestandteil der Abfragekassette 10 ist ein analoger induktiver Sensor (AIS) 16, der der Erfassung des Greiferöffnungswinkels, somit des Öffnungswinkels der Spannklauen 6 und der Erfassung eines von diesen gehaltenen, nicht veranschaulichten Bauteils dient. Der jeweilige Laser 15 strahlt auf eine kleine Optik auf dem Empfänger einer Laser-Empfangseinheit 11, die Bestandteil einer zentralen Steuereinheit 9 bildet, die mit der Haupttragstange 2 verbunden ist. Der jeweilige Laser 15 und die Laser-Empfangseinheit 11 bilden die Einrichtung 14 zur Fehlererkennung.

Die den jeweiligen Greifern 7 zugeordneten Laser 15, vorliegend die den beiden Greifern 7 zugeordneten beiden Laser - gegebenenfalls eine Vielzahl von Laser 15, die einer entsprechenden Vielzahl von Greifern zugeordnet sind - strahlen auf die Optik der Laserempfangseinheit 11, wobei die Laser 15 nacheinander rotierend eingeschaltet werden. Fehlt eines der Lasersignale, steht eine Dejustage fest, d.h. es befindet sich der jeweilige Laser 15 und damit der diesem zugeordnete Greifer 7 in einer fehlerhaften Position. Folglich wird die Roboterbewegung unterbrochen. Der geeignete Zeitpunkt der Unterbrechung der Roboterbewegung wird zweckmäßig durch Triggern festgelegt. Unter Umständen ist es zweckmäßig, mehrere Laser-Empfangseinheiten 11 vorzusehen; dies kann sich aufgrund der räumlichen Gegebenheiten des Greifersystems 1 und der Anzahl der Greifer 7 ergeben. Eine einfache Fehleranalyse ist unmittelbar auf dem Greifer darstellbar, zum Beispiel durch Leuchtdioden, die die Fehlerquelle anzeigen. Bei dieser Fehlerquelle kann es sich nicht nur um die mittels des Lasers verifizierte Greiferposition handeln, sondern gleichfalls um die Zustände "Greiferöffnungswinkel" und "Bauteil vorhanden".

Die Pfeile 12 verdeutlichen das berührungslose Zusammenwirken des dem jeweiligen Greifer 7 zugeordneten Lasers 15 mit der der Haupttragstange 2 zugeordneten Laser-Empfangseinheit 11. Mit der Bezugsziffer 13 ist eine Leitung bezeichnet, die entlang der Tragstangen 2, 3 und 4 geführt ist und die Abfragekassette 10 bzw. Sensor 16 des jeweiligen Greifers 7 mit der zentralen Steuereinheit 9 verbindet. Diese Leitung 13 ist nur für einen Greifer 7 dargestellt.

Nachdem die Greifer 7 eingestellt wurden und prozesssicher laufen, werden die Laser manuell auf die Empfangseinheit 11 eingestellt. Alle Meldungen werden über die zentrale Steuereinheit 9 verarbeitet, somit die Lasereingänge und auch die Informationen, die über die Abfragekassette 10 bezüglich des jeweiligen Greifers 7 erhalten werden. Solange alle Meldungen eingehen, meldet die Einheit "in Ordnung" an die Steuerung. Sollte sich eine Spannstelle durch äußere Einflüsse verstellen, trifft der Laser nicht mehr die Optik und das Signal zeigt ein Verstellen des Greifers an. Die Logik meldet umgehend "nicht in Ordnung" an die Steuerung. Die Anlage bleibt stehen oder wechselt automatisch den Greifer. Dies gilt selbstverständlich auch dann, wenn die jeweilige Abfragekassette eine Fehlermeldung abgibt.

Gemäß dem Ausführungsbeispiel ist ein Online-Meßsystem mit analoger induktiver Sensor-Greiferabfrage und Laser-Positionsüberwachung vorgesehen. Jeder Greifer hat einen Laser und eine AIS-Greiferabfrage. Der AIS-Sensor 16 und der einstellbare Laser 15 sind in einem Gehäuse untergebracht, das am Greifer 7 montiert wird. Alle AIS-Sensoren 16 werden an der Laser-Empfangseinheit 11 über Steckverbindungen kontaktiert. Der AIS-Sensor kontrolliert die Schließfunktion des Greifers. Die Schließzeiten werden in der zentralen Steuereinheit 9 überwacht. Zwischen der Laser-Empfangseinheit 11 und dem Roboter muss nur ein minimaler Datenaustausch stattfinden, da die Laser-Empfangseinheit 11 bzw. die zentrale Steuereinheit 9 eine dezentrale Intelligenzeinheit darstellt. Die Kopplung zwischen Greifersystem 1 und Roboter kann kabellos mit Transformatorkopplung ausgeführt sein, so dass der Roboter sein Greifersystem leicht tauschen kann.

Das beschriebene Sensorsystem für Greiferanordnungen, das insbesondere in der Automobilindustrie Verwendung findet, hat viele Vorteile:
- automatische Erkennung einer Dejustage
- ohne Anfahren einer Messposition
- ohne Zeitverlust
- direkte Kontrolle der Greiferposition
- hohe Genauigkeit
- Genauigkeit durch Optik bestimmbar
- keine aufwendige Verkabelung
- verschmutzungssicher, weil mit großer Leuchtdichte gearbeitet werden kann
- Entlastung der Steuerung

## Patentansprüche

1. Werkzeugsystem (1) zur Verwendung mit einem Roboter, wobei das Werkzeugsystem (1) ein mittels des Roboters bewegbares Tragsystem (8) und mindestens ein am Tragsystem (8) positioniertes Werkzeug (7) aufweist, **dadurch gekennzeichnet, dass** eine Einrichtung (14) zur Fehlererkennung vorgesehen ist, die berührungslos die Position des jeweiligen Werkzeuges (7) relativ zum Tragsystem (8) erfasst.

2. Werkzeugsystem nach Anspruch 1, **dadurch gekennzeichnet, dass** die Einrichtung (14) zur Fehlererkennung in das Werkzeugsystem (1) integriert ist.

3. Werkzeugsystem nach Anspruch 2, **gekennzeichnet durch** eine auf Basis von Laser, Optik, Funk oder Infrarot funktionierende Einrichtung (14) zur Fehlererkennung.

4. Werkzeugsystem nach Anspruch 3, **dadurch gekennzeichnet, dass** jedem Werkzeug (7) ein Laser (15), insbesondere ein einstellbarer Laser (15), zugeordnet ist, und ein oder mehrere Laser-Empfangseinheiten (11) dem Tragsystem (8) zugeordnet sind.

5. Werkzeugsystem nach Anspruch 4, **dadurch gekennzeichnet, dass** eine einzige Laser-Empfangseinheit (11) dem Tragsystem (8) zugeordnet ist.

6. Werkzeugsystem nach Anspruch 4 oder 5, **dadurch gekennzeichnet, dass** mindestens eine Laser-Empfangseinheit (11) einer Haupttragstange (2) zugeordnet ist, die mit dem Roboter verbindbar ist.

7. Werkzeugsystem nach einem der Ansprüche 4 bis 6, **dadurch gekennzeichnet, dass** der jeweiligen Laser-Empfangseinheit (11) eine Auswerteeinheit zugeordnet ist.

8. Werkzeugsystem nach Anspruch 7, **dadurch gekennzeichnet, dass** eine zentrale Steuereinheit (9) vorgesehen ist, die die Laser-Empfangseinheit (11) und die Auswerteeinheit aufweist.

9. Werkzeugsystem nach einem der Ansprüche 1 bis 8, **dadurch gekennzeichnet, dass** das Werkzeug (7) als Greifer ausgebildet ist.

10. Werkzeugsystem nach Anspruch 9, **dadurch gekennzeichnet, dass** jedem Greifer (7) ein Sensor (16), insbesondere ein analoger induktiver Sensor (16), zugeordnet ist, wobei der jeweilige Sensor (16) der Erfassung des Greiferöffnungswinkels und/oder der Erfassung eines vom Greifer (7) gehaltenen Bauteils dient.

11. Werkzeugsystem nach Anspruch 10, **dadurch gekennzeichnet, dass** in den Sensor (16) der Laser (15) integriert ist.

12. Werkzeugsystem nach einem der Ansprüche 9 bis 11, **dadurch gekennzeichnet, dass** die Auswerteeinheit die Greiferzustände - Greiferöffnungswinkel, Bauteil vorhanden, Greiferposition relativ zum Tragsystem (8) ― überprüft und die Informationen zu einem Signal bündelt.
